# EUROPÄISCHE PATENTSCHRIFT

(11) **EP 3 659 417 B1**
(45) Veröffentlichungstag und Bekanntmachung des Hinweises auf die Patenterteilung: **05.11.2025**
(21) Anmeldenummer: 18208591.0
(22) Anmeldetag: 27.11.2018
(51) Int. Cl.: A01C 7/06, A01C 7/20, A01C 7/18, A01C 7/08, A01C 21/00

(54) **VERFAHREN UND ANORDNUNG ZUM AUSBRINGEN VON MEHRKÖRNIGEN DOSIERMENGEN EINES GRANULATARTIGEN MATERIALS MITTELS EINER LANDWIRTSCHAFTLICHEN MASCHINE SOWIE VERTEILMASCHINE**
METHOD AND DEVICE FOR THE DELIVERY OF MULTI-GRAIN DOSAGE QUANTITIES OF A GRANULATE MATERIAL BY MEANS OF AN AGRICULTURAL MACHINE
PROCÉDÉ ET DISPOSITIF D'ÉPANDAGE DES QUANTITÉS DOSÉES À PLUSIEURS GRAINS D'UN MATÉRIAU DE TYPE GRANULEUX AU MOYEN D'UN ENGIN AGRICOLE AINSI QUE MACHINE D'ÉPANDAGE

(43) Veröffentlichungstag der Anmeldung: 03.06.2020
(73) Patentinhaber: Kverneland Group Soest GmbH, 59494 Soest (DE)
(72) Erfinder: Bouten, Max, 51107 Köln (DE); Nellessen, Jan, 53949 Dahlem (DE); Sons, Daniel, 46499 Hamminkeln (DE); Schumacher, Ferdinand, 59510 Lippetal-Oestinghausen (DE)
(74) Vertreter: Bittner, Thomas L.

(56) Entgegenhaltungen:
- EP-A1- 0 071 954
- EP-A1- 0 266 722
- US-A- 3 653 550

## Beschreibung

Die Erfindung betrifft ein Verfahren und eine Anordnung zum Ausbringen von mehrkörnigen Dosiermengen eines granulatartigen Materials mittels einer landwirtschaftlichen Maschine sowie eine Verteilmaschine.

### Hintergrund

Landwirtschaftliche Maschinen können eingerichtet sein, unterschiedliche granulatartige Materialien auszubringen, beispielsweise Saatkörner oder Dünger. Bei den Maschinen wird das auszubringende Material regelmäßig in einem Tank oder einem Vorratsbehälter bereitgestellt, von wo aus das Material einer Dosiereinrichtung zugeführt wird, mit der das auszubringende granulatartige Material dosiert wird, um es dann auf das Feld auszubringen. So ist in Verbindung mit Sämaschinen bekannt, Saatkörner mit Hilfe der Dosiereinrichtung zu vereinzein, um einzelne Saatkörner auf das Feld auszubringen, über welches die landwirtschaftliche Maschine bewegt wird. Auch das Ausbringen von mehreren Saatkörnern in einer Dosiermenge kann vorgesehen sein. Bei Düngerkörnern erfolgt das Ausbringen üblicherweise als kontinuierlicher Strom von Düngerkörner aus dem Tank auf das Feld.

Dokument EP 1 825 737 A1 offenbart ein System und ein Verfahren zum elektronischen Pulsieren einer Chemikalie mit Saatgut. Das System und das Verfahren umfassen ein Samenabgaberohr, das zum Abgeben von Samen konfiguriert ist, ein Granulatrohr, das zum Abgeben von Chemikalien konfiguriert ist, ein elektrisches Ventil, das zum Öffnen konfiguriert ist, so dass chemische Granulate aus dem chemischen Granulatrohr abgegeben werden können und einen Näherungssensor, der betriebsmäßig mit dem elektrischen Ventil gekoppelt ist, wobei der Sensor so konfiguriert ist, dass er ein Saatgut erfasst, das von dem Saatgutausgaberohr abgegeben wird. Das System kann auch einen Dosiermechanismus zum Dosieren der mit dem Saatgut abgegebenen Chemikalienmenge umfassen. Der Dosiermechanismus wird mittels einer Radareinheit an einem mit dem System verbundenen Traktor gesteuert, und der Dosiermechanismus ist programmiert, eine vorbestimmte Menge an Chemikalie mit dem Saatgut abzugeben.

Das Dokument DE 10 2010 017 127 A1 betrifft eine kombinierte Verteilmaschine, bestehend aus einer Einzelkornsämaschine mit Saatkornvereinzelungsvorrichtungen und Säscharen und einer Düngerverteilmaschine mit Düngerdosiereinrichtungen und zugeordneten Düngerablageeinrichtungen, wobei die von den Saatkornvereinzelungseinrichtungen vereinzelten Samenkörner in zumindest annähernd gleichen Abständen mittels der Säschare in den Boden abgelegbar sind und der von den Düngerdosiereinrichtungen dosierte Dünger über die Düngerablegeeinrichtungen zumindest in der Nähe der im Boden abgelegten Samenkörner im Boden platzierbar ist. Die Düngerdosiereinrichtungen führen den dosierten Dünger derart den Düngerablegeeinrichtungen zu, dass die Düngergaben für jedes Samenkorn in portionierter Weise in Abständen zueinander jedem Samenkorn in zugeordneter Weise im Boden ablegbar sind.

Dokument DE 10 2015 110 079 A1 offenbart ein Verfahren zur Düngerausbringung im Kartoffelanbau, bei dem im Bereich jeweiliger, in Kartoffeldämmen, -beeten o. dgl. Bodenformen von Agrarflächen einzulegender Saatknollen, ein Dünger in flüssigem, gasförmigem oder festem Zustand eingebracht wird. In Längsrichtung von Kartoffelreihen wird hierbei eine eine oder mehrere Düngelinie(n) aufweisende Struktur geschaffen. Das Konzept sieht vor, dass ein zumindest in seiner Zusammensetzung, seiner Menge, seiner Konsistenz und / oder seiner Abstandslage zur Saatknolle variierbarer Dünger teilflächenspezifisch steuerbar dem Nahbereich von Saatknollen zugeführt wird. Die dafür vorgesehene Austragvorrichtung weist eine mit zumindest zwei Vorratsbehältern verbindbare Dosiereinheit auf, so dass der darin aus zumindest zwei Düngemitteln mischbare Dünger über ein diesen aufteilbar erfassendes Zuführsystem in den Bereich des Kartoffeldamms überführbar ist. Dabei wird mittels einer rechnergestützten Steuereinheit ein direkter Austrag von Düngemittel(n), eine jeweilige Mischung von Düngemitteln und/oder eine jeweilige Mengendosierung des in Düngelinien erfolgenden Düngeraustrags teilflächenspezifisch eingestellt.

Aus dem Dokument US 3,653,550 A ist eine Vorrichtung zum Ausbringen von mehrkörnigen Dosierungen eines granulatartigen Materials mittels einer landwirtschaftlichen Maschine bekannt. Nacheinander werden Dosiermengen des granulatartigen Materials in einem Ausbringrohr eingebracht und jeweils mittels eines Fluidstroms ausgestoßen. Nach einem solchen Ausbringvorgang wird dann eine nächste dosierte Menge des granulatartigen Materials in der Ausbringleitung eingebracht.

Ein ähnliches Arbeitsprinzip beschreibt das Dokument EP 0 266 722 A1, wobei dort zuvor vereinzelte Saatkörner nacheinander in einem Ausbringrohr eingebracht und einzeln mittels Fluidstrom ausgestoßen werden.

Dokument EP 0 071 954 A1 offenbart eine Vorrichtung zum Vereinzeln und zum Ablegen von körnigem Gut, insbesondere Saatgut, die trichterförmig nach unten verjüngend ausgebildet ist. Am unteren Trichterausgang ist eine Bohrung angeordnet, die kleiner als das kleinste Korn ist. In den Trichter wird ein Luftstrom geleitet, der die überzähligen Körner aus dem unteren Trichterteil herausbläst, bis auf eines, das an der unteren Durchgangsbohrung infolge des Druckunterschiedes festgehalten wird. Zur Ablage der Körner dient ein Spreizbacken, der einen Teil der Trichterwand bildet und so groß ist, dass seine Öffnung beim Spreizen das größte Korn noch herausfallen lässt. Der Luftstrom in den Trichter wird durch ein Blasrohr eingeleitet. Dieses Blasrohr kann als Sperre für herabfallende Körner heb- und senkbar angeordnet sein. Durch einen Schieber, der abhängig von der Bewegung des Spreizbackens gesteuert wird, ist eine Sperre für herabfallende Körner bei geöffneten Spreizbacken vorgesehen. Der Schieber kann gleichzeitig den Spreizbacken betätigen.

### Zusammenfassung

Aufgabe der Erfindung ist es, ein Verfahren und eine Anordnung zum Ausbringen von mehrkörnigen Dosiermengen eines granulatartigen Materials mittels einer landwirtschaftlichen Maschine sowie eine Verteilmaschine anzugeben, die ein verbessertes Ausbringen des granulatartigen Materials ermöglichen.

Zur Lösung ist ein Verfahren zum Ausbringen von mehrkörnigen Dosiermengen eines granulatartigen Materials mittels einer landwirtschaftlichen Maschine nach dem unabhängigen Anspruch 1 geschaffen. Weiterhin ist eine Anordnung zum Ausbringen von mehrkörnigen Dosiermengen eines granulatartigen Materials für eine landwirtschaftliche Maschine nach dem unabhängigen Anspruch 9 geschaffen. Darüber hinaus ist eine Verteilmaschine vorgesehen, die zum Beispiel als eine Sämaschine ausgeführt ist. Ausgestaltungen sind Gegenstand von abhängigen Unteransprüchen.

Mit Hilfe der Dosiereinrichtung werden aus dem zugeführten Strom des granulatartigen Materials, zum Beispiel Dünger oder Saatkörner, vom Tank zur Dosiereinrichtung vereinzelte mehrkörnige Dosiermengen erzeugt, die dann jeweils ganz oder teilweise als eine jeweilige Dosierung zeitlich beabstandet ausgebracht werden können, so dass ausgehend von dem zugeführten Strom des granulatartigen Materials zur Dosiereinrichtung eine diskontinuierliche Folge von Dosierungen gebildet wird. Auf diese Weise ist es ermöglicht, mehrkörnige Dosiermengen in bestimmten zeitlichen Abständen auf das Feld auszubringen, zum Beispiel in eine Feldfurche.

Das Zuführen des granulatartigen Materials, sei es in Form eines kontinuierlichen oder eines unterbrochenen (diskontinuierlichen) Materialstroms, aus dem Tank zu der Dosiereinrichtung wird während des Erzeugens und des Abgebens der mehrkörnigen Dosiermengen fortgeführt.

Für die in der Dosiereinrichtung erzeugten mehrkörnigen Dosiermengen kann jeweils vorgesehen sein, diese im Rahmen einer Dosierung vollständig oder nur teilweise abzugeben. Verbleibt ein Rest der mehrkörnigen Dosiermenge nach dem Abgeben einer Dosierung in der Dosiereinrichtung, so bildet diese eine Anfangsmenge für eine nachfolgend zu erzeugende mehrkörnige Dosiermenge.

Das Ausbringen der in zeitlichen Abständen bereitgestellten Dosierungen kann über eine Ausbringleitung der Ausbringeinrichtung erfolgen, die sich in vertikaler Richtung erstrecken kann, sei es in einem Winkel von etwa 90° zum Erdboden oder schräg hierzu, und eine Ausgangsöffnung aufweist, durch die hindurch das granulatartige Material auf das Feld ausgebracht werden kann.

Die nacheinander ausgebrachten Dosierungen können hinsichtlich der umfassten Kornmenge gleichgroß oder verschieden sein.

Beim Zuführen des granulatartigen Materials aus dem Tank zur Dosiereinrichtung kann das granulatartige Material ausschließlich aufgrund der Gravitationskraft transportiert werden. Alternativ kann ein ergänzender Luftstrom vorgesehen sein, welcher das granulatartige Material zur Dosiereinrichtung hin beschleunigt.

Das granualatartige Material wird für einen vorbestimmten Zeitraum in der Sammeleinrichtung gesammelt oder aufgestaut, um dann die so erzeugte mehrkörnige Dosiermenge nach Ablauf eines vorgegebenen Zeitraums auszubringen. In Abhängigkeit von der Zuführung des granulatartigen Materials aus dem Tank und des Zeitraums zwischen aufeinanderfolgenden Ereignissen zum Öffnen der Sammeleinrichtung wird pro mehrkörniger Dosiermenge granulatartiges Material in einem vorbestimmten Umfang vor der Abgabe gesammelt (dosiert).

Der Fluidstrom kann mittels der Öffnungseinrichtung als ein Strom eines Gases bereitgestellt werden, zum Beispiel als ein Luftstrom, insbesondere in Form von zeitlich beabstandeten Fluidstromimpulsen, die jeweils ein Öffnen der Ausgabe der Sammeleinrichtung für einen vorbestimmbaren Öffnungszeitraum bewirken, worauf sich die Sammeleinrichtung (Ausgabe) wieder schließt und erneut granulatartiges Material für eine nächste mehrkörnige Dosiermenge gesammelt wird. Der Fluidstrom kann einer Folge von periodischen Öffnungsimpulsen entsprechend bereitgestellt werden. Die Sammeleinrichtung kann bei diesen oder anderen Ausführungsformen zum Beispiel am Eingang oder innerhalb einer Ausbringleitung angeordnet sein, über die die Dosierungen aufs Feld ausgebracht werden. Die in zeitlichen Abständen bereitgestellten Fluidströme oder Fluidstöße führen zur diskontinuierlichen oder getakteten Abgabe der mehrkörnigen Dosierungen / Dosiermengen, welche ihrerseits mittels des Zustroms des granulatartigen Materials aus dem Tank vorbereitet wurden.

Es kann vorgesehen sein, die die Ausgabe öffnenden Fluidströme mit von der Fahrgeschwindigkeit der landwirtschaftlichen Maschine abhängiger Wiederholfrequenz zu erzeugen.

Als granulatartiges Material kann ein Düngermaterial bereitgestellt werden, und auf dem Feld können getrennte mehrkörnige Düngerdosierstellen erzeugt werden. Hierbei werden dosierte mehrkörnige Düngemittelmengen bereitgestellt und in zeitlichen Abständen auf das Feld ausgebracht.

Die mehrkörnigen Düngerdosierstellen können auf dem Feld jeweils einer getrennt gebildeten Saatstelle mit einem oder mehreren Saatkörnern zugeordnet erzeugt werden. Bei dieser Ausführungsform ist die landwirtschaftliche Maschine eingerichtet, sowohl ein Saatgut wie auch ein zugeordnetes Düngermaterial auszubringen. Hierfür können getrennte Tanks oder Vorratsbehälter vorgesehen sein, aus denen das jeweilige Material dann getrennt ausgebracht wird. Das Ausbringen einer Dosiermenge von Saatkörnern (Einzelkorn oder mehrere Saatkörner) kann zeitlich koordiniert zum Ausbringen der Düngermaterialdosierungen erfolgen, so dass in einer Ausführungsform pro Dosiermenge Saatkorn eine Dosierung des Düngermaterials ausgebracht wird, beispielsweise derart, dass beide Dosiermengen an ein und derselben Dosierstelle oder wahlweise in einem definierten Abstand zueinander auf dem Feld platziert werden. Das zeitliche Koordinieren des Betriebs der Dosier- und Ausbringeinrichtungen für das Saatkorn einerseits und das Düngermaterial andererseits kann mit Hilfe einer Steuereinrichtung realisiert werden, beispielsweise dadurch, dass von der Steuereinrichtung zeitlich koordinierte Triggerimpulse bereitgestellt werden, um das Dosieren und das Ausbringen der jeweiligen Dosiermenge koordiniert ausführen.

Der Fluidstrom kann über eine Fluidzuleitung auf die Ausgabe der Sammeleinrichtung gegeben werden, welche wenigstens abschnittsweise in einer Zuführleitung angeordnet ist, über welche das granulatartige Material aus dem Tank der Dosiereinrichtung zugeführt wird. Das granulatartige Material aus dem Tank kann die Fluidzuleitung ein- oder mehrseitig umgeben. Das zugeführte granulatartige Material, beispielweise der kontinuierliche Zustrom, bewegt sich dann außerhalb gegenüber einer äußeren Oberfläche der Fluidzuleitung.

Zum Öffnen der Ausgabe der Sammeleinrichtung wird ein verlagerbares Verschlusselement verlagert. Zum Öffnen der verlagerbaren Verschlusselemente kann diesem beispielsweise ein Ausgang der Fluidzuleitung, welcher wahlweise mit einer Ausgangsdüse versehen ist, gegenüberliegen, so dass der in zeitlichen Abständen abgegebene Fluidstrom das oder die verlagerbaren Verschlusselemente zum Öffnen der Ausgabe "aufstoßen" kann. Die Verschlusselemente können gegen eine solche Verlagerung vorgespannt sein, so dass sie nach Beendigung des Fluidstroms selbsttätig wieder in ihre Ausgangslage zurückkehren, in welcher die Ausgabe der Sammeleinrichtung verschlossen ist. Mehrere Verschlusselemente können vorgesehen sein, die gemeinsam die Ausgabe der Sammeleinrichtung verschließen. Die Verschlusselemente können zum Beispiel Bürsten- oder Membranelemente aufweisen, die flexibel biegbar sind, zum Beispiel als Reaktion auf den Fluidstrom zum Öffnen der Ausgabe der Sammeleinrichtung. Die Verschlusselemente können eingerichtet sein, als Reaktion auf den Fluidstrom die Ausgabe der Sammeleinrichtung wenigstens in einem mittleren Bereich zu öffnen. Eine oder mehrere Verschlusselemente können zu einer Längsrichtung der an die Sammeleinrichtung koppelnden Ausbringleitung schräg gestellt sein, beispielsweise zum Ausbilden einer Trichterform, in welcher die mehrkörnigen Dosiermengen vor dem Abgeben aus der Sammeleinrichtung aufgenommen werden.

Die Sammeleinrichtung kann Dosierfächer zum jeweiligen Aufnehmen einer der mehrkörnigen Dosiermengen aufweisen. Die mehreren Dosierfächer können in einem Beispiel gleichzeitig mittels des Stroms des granulatartigen Materials befüllt werden. Die Dosierfächer können in einer Dosierkammer der Dosiereinrichtung angeordnet sein, in welcher das granulatartige Material eingebracht wird, um dort dann auf die Dosierfächer verteilt zu werden.

Die Dosierfächer können auf einem Drehbauteil getrennt angeordnet sein, derart, dass die Dosierfächer jeweils mittels des Drehbauteils zu der Ausgabe hin und von dieser weg verlagerbar sind. Das Drehbauteil kann mit einem Drehteller oder Zellenrad gebildet sein, an dem die Dosierfächer gebildet sind, zum Beispiel auf einer Flachseite des Drehtellers, welcher im Wesentlichen in horizontaler Richtung ausgerichtet sein kann, wobei die Dosierfächer auf einer Deckseite angeordnet sind. Die Dosierfächer können zu einer Verteilrampe hin geöffnet sein, auf die der Strom des granulatartigen Materials aus dem Tank fällt, um das granulatartige Material über die Verteilrampe dann in den Dosierfächern einzubringen.

Zum Ausbringen der mehrkörnigen Dosiermengen aus dem jeweiligen Dosierfach kann vorgesehen sein, dass eine Bodenöffnung des Dosierfachs mit einer Öffnung der Ausgabe der Sammeleinrichtung zur wenigstens teilweisen Überlappung gebracht wird, so dass das granulatartige Material der mehrkörnigen Dosiermenge durch die beiden Öffnungen hindurch in die Ausbringleitung gelangt. Hierzu kann dann eine der Öffnung der Ausgabe zugeordnete Verschlusseinrichtung mittels des in zeitlichen Abständen bereitgestellten Fluidstroms geöffnet werden. Hierzu kann der Fluidstrom(impuls) durch die Öffnung des Dosierfachs hindurch auf die Verschlusseinrichtung gegeben werden.

Die Dosierungen können zumindest in einem Abschnitt eines Transportweges in der Ausbringeinrichtung, zum Beispiel in einer hiervon umfassten Ausbringleitung (beispielweise Fallrohr), mittels eines gesteuerten Luftstroms beschleunigt transportiert werden. Der gesteuerte Luftstrom unterstützt die gravitationsbedingte Bewegung des granulatartigen Materials auf seinem Transportweg in der Ausbringeinrichtung, zum Beispiel in einer Ausbringleitung oder einem Ausbring- oder Fallrohr. Der gesteuerte Luftstrom kann allein oder teilweise von dem Fluidstrom gebildet sein, der in zeitlichen Abständen auf die Ausgabe der Sammeleinrichtung gegeben wird, um diese zum Abgeben der mehrkörnigen Dosiermengen diskontinuierlich zu öffnen.

Die Dosierungen können von der Dosiereinrichtung mit einer Frequenz von mindestens 5 Dosierungen pro Sekunde abgegeben werden, bevorzugt mit einer Frequenz von mindestens 20 Dosierungen pro Sekunde (Frequenz in Hz). Zum Beispiel können Ausbringfrequenzen von bis zu etwa 30 Hz oder bis zu etwa 40 Hz vorgesehen sein. Mit einer solchen Frequenz können dann die Dosierungen aufs Feld aufgebracht werden. Es kann vorgesehen sein, für die landwirtschaftliche Maschine im Betrieb eine Fahrgeschwindigkeit zu erfassen und die Ausbringfrequenz in Abhängigkeit hiervon einzustellen, also zum Beispiel bei höheren Geschwindigkeiten eine größere Ausbringfrequenz anzuwenden. Auch kann die Ausbringfrequenz eingestellt werden, um verschiedene Abstände der Dosierstellen auf dem Feld auszubilden.

Die vorangehend in Verbindung mit dem Verfahren erläuterten Ausgestaltungen können entsprechend im Zusammenhang mit der Anordnung zum Ausbringen von mehrkörnigen Dosiermengen des granulatartigen Materials für eine landwirtschaftliche Maschine vorgesehen sein. Entsprechendes gilt für die Verteilmaschine mit einer solchen Anordnung.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Anordnung zum Ausbringen von mehrkörnigen Dosiermengen eines granulatartigen Materials für eine landwirtschaftliche Maschine;
- Fig. 2: eine schematische perspektivische Darstellung einer weiteren Anordnung zum Ausbringen von mehrkörnigen Dosierungen eines granulatartigen Materials für eine landwirtschaftliche Maschine;
- Fig. 3: eine Darstellung der Anordnung aus Fig. 2 von oben und
- Fig. 4: eine schematische perspektivische Darstellung einer Feldfurche mit voneinander getrennten oder beabstandeten Dosierstellen.

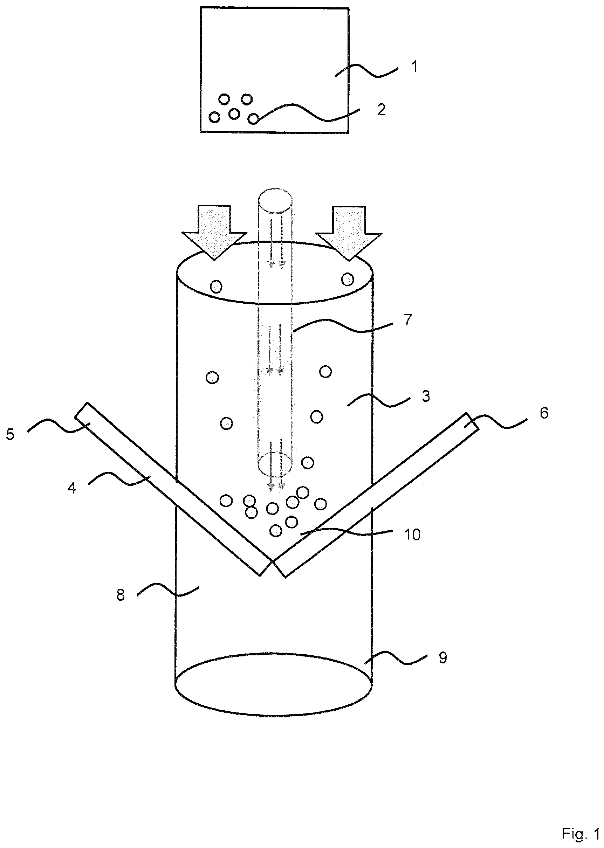

Fig. 1 zeigt eine schematische Darstellung einer Anordnung zum Ausbringen von mehrkörnigen Dosiermengen eines granulatartigen Materials, beispielsweise eines Düngermaterials, für eine landwirtschaftliche Maschine, insbesondere eine Verteilmaschine, zum Beispiel Sämaschine. In einem Tank oder Vorratsbehälter 1 wird ein auszubringendes granulatartiges Material 2 bereitgestellt. Das granulatartige Material 2 wird aus dem Tank 1 einer Dosiereinrichtung 3 zugeführt, zum Beispiel als kontinuierlicher Strom. Bei dem gezeigten Beispiel gelangt das geführte granulatartige Material 2 zu einer Sammeleinrichtung 4, die mit Verschlusselementen 5, 6 gebildet ist, so dass das granulatartige Material 2 sich auf den Verschlusselementen 5, 6 sammelt, wodurch eine mehrkörnige Dosiermenge bereitgestellt wird. Wenn eine vorgebbare mehrkörnige Dosiermenge erzeugt wurde, wird über eine Fluidzuleitung 7 ein Luftimpuls oder Luftstoß in Richtung der Verschlusselemente 5, 6 ausgegeben, wodurch diese zum Öffnen einer Abgabe 8 der Sammeleinrichtung 4 nach unten weggedrückt werden (nicht dargestellt), so dass das granulatartige Material 2 nach unten abgegeben werden kann in einen Abschnitt einer Ausbringleitung 9, von wo die so von der Sammeleinrichtung 4 abgegebene Dosiermenge auf das Feld ausgebracht werden kann. Nach Beendigung des Fluidluftstroms gehen die Verschlusselemente 5, 6 wieder in ihre Ausgangsstellung gemäß Fig. 1 zurück, so dass die Sammeleinrichtung 4 geschlossen ist, um erneut eine mehrkörnige Dosiermenge des granulatartigen Materials 2 anzusammeln. Der Fluidluftstrom wird in periodischen Abständen ausgegeben, so dass zeitlich beabstandet (diskontinuierlich) Dosierungen des granulatartigen Materials 2 ausgegeben werden, die dann aufs Feld ausgebracht werden.

Die Verschlusselemente 5, 6 sind beispielsweise mit Bürsten oder flexiblen Membranelementen gebildet, die sich nach Beendigung des Luftstoßes wieder in die in Fig. 1 gezeigte Schließstellung zurückbewegen. Bei der gezeigten Ausführungsform sind die Verschlusselemente 5, 6 nach unten schräg gestellt und bilden einen Trichter 10 aus, in welchem sich das granulatartige Material 2 sammelt.

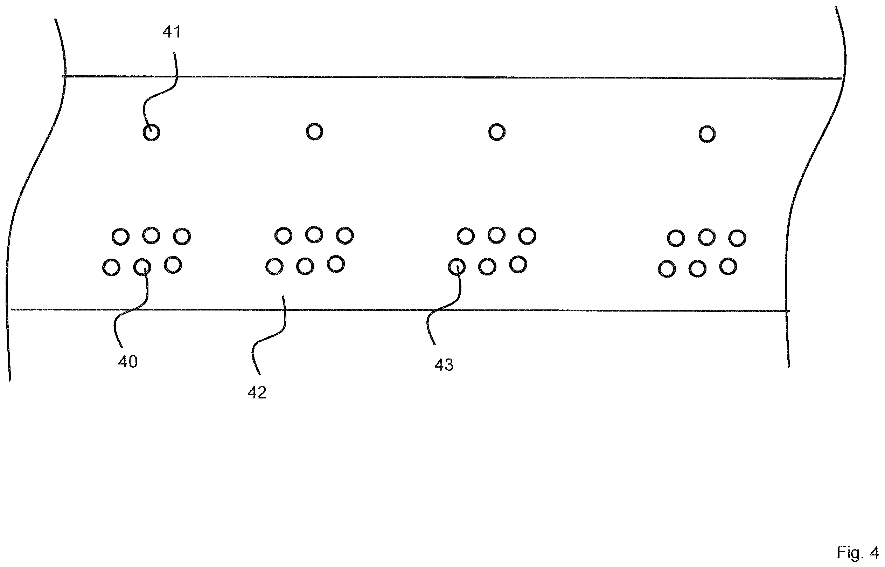

Mit Hilfe der Anordnung in Fig. 1 wird der Zustrom des granulatartigen Materials 2 aus dem Tank 1 in eine Folge zeitlich beabstandeter und somit diskontinuierlich abgegebener Dosierungen des granulatartigen Materials 2 gewandelt. Dieses ermöglicht es, bei einer Sämaschine, die eingerichtet ist, sowohl Saatkörner wie auch Düngermaterial dosiert abzugeben, pro Einzeikorn des Saatguts getrennte Dosiermengen des granulatartigen Materials 2 auf das Feld abzugeben, wie dies beispielhaft in der schematischen Darstellung in Fig. 4 gezeigt ist.

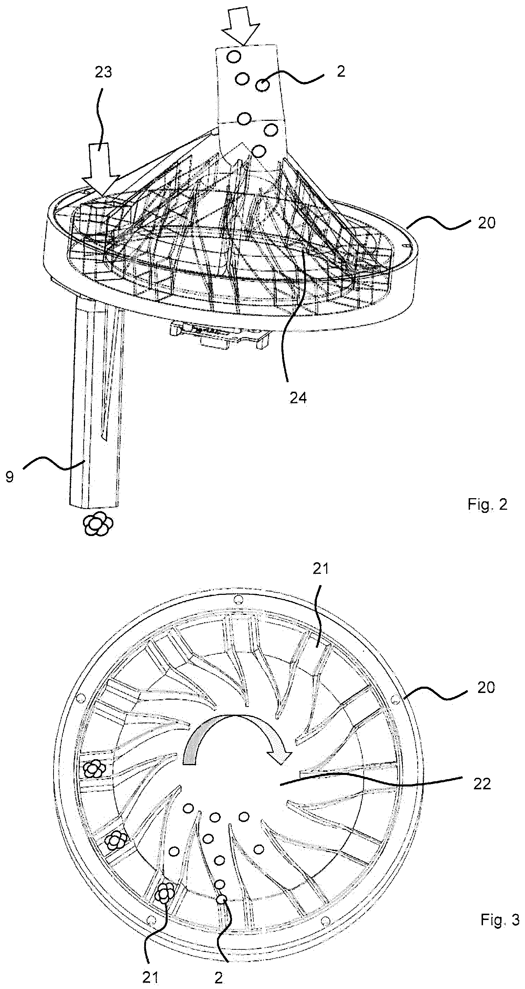

Die Fig. 2 und 3 zeigen schematische Darstellungen einer weiteren Anordnung zum Ausbringen von mehrkörnigen Dosierungen des granulatartigen Materials 2 für eine landwirtschaftliche Maschine. Für gleiche Merkmale werden dieselben Bezugszeichen wie in Fig. 1 verwendet. Bei dem Beispiel in den Fig. 2 und 3 ist die Sammeleinrichtung 4 mit einem Drehteller 20 gebildet, auf dessen Deckseite mehrere Dosierfächer 21 gebildet sind, die sich jeweils zu einer Verteilrampe 22 hin öffnen, so dass das auf die Verteilrampe 22 aufgebrachte granulatartige Material 2 (vgl. Fig. 2) in die Dosierfächer 21 gelangt. Der Drehteller 20 wird gedreht, um eine bodenseitige Öffnung der Dosierfächer 21 mit einer Öffnung der Ausbringleitung 9 zur Deckung zu bringen, so dass die in dem Dosierfach 21 aufgenommene mehrkörnige Dosiermenge nach unten durch die Ausbringleitung 9 ausgebracht werden kann. Zu diesem Zweck wird ein Luftstromimpuls 23 auf die Öffnungen gegeben, um eine Verschlusseinrichtung zu öffnen, wie dies vorangehend beschrieben wurde. Hierbei kann ergänzend ein Luftstrom vorgesehen ein, der in die Ausbringleitung 9 strömt und dort das granulatartige Material 2 zum Feld hin beschleunigt.

Der Drehteller ist in einer Kammer 24 drehbar gelagert.

Auch mit Hilfe der Anordnung in den Fig. 2 und 3 kann zum Beispiel ein Düngermaterial 40 der Ausführung in Fig. 4 entsprechend dosiert zu einem oder mehreren Saatkörnern 41 aufs Feld in den Erdboden 42 ausgebracht werden.

## Patentansprüche

1. Verfahren zum Ausbringen von mehrkörnigen Dosierungen eines granulatartigen Materials mittels einer landwirtschaftlichen Maschine, mit
- Bereitstellen eines granulatartigen Materials (2) in einem Tank (1);
- Zuführen des granulatartigen Materials (2) aus dem Tank (1) zu einer Dosiereinrichtung (3);
- Erzeugen von mehrkörnigen Dosiermengen des granulatartigen Materials (2) mittels der Dosiereinrichtung (3);
- Abgeben der mehrkörnigen Dosiermengen des granulatartigen Materials durch die Dosiereinrichtung (3) zu einer Ausbringeinrichtung (9), wobei die mehrkörnigen Dosiermengen hierbei jeweils teilweise oder vollständig als zeitlich beabstandete Dosierungen diskontinuierlich abgegeben werden; und
- Ausbringen der zeitlich beabstandeten Dosierungen mittels der Ausbringeinrichtung (9), wodurch auf einem Feld, über welches sich die landwirtschaftliche Maschine bewegt, getrennte mehrkörnige Dosierstellen erzeugt werden;
wobei das zugeführte granulatartige Material (2) zum Erzeugen der mehrkörnigen Dosiermengen in einer Sammeleinrichtung (4) der Dosiereinrichtung (3) gesammelt und eine Ausgabe der Sammeleinrichtung (4) zum diskontinuierlichen Abgeben der Dosierungen in zeitlichen Abständen mit einem Fluidstrom beaufschlagt und hierdurch geöffnet wird, um die Dosierungen zum Ausbringen freizugeben,
wobei das Zuführen des granulatartigen Materials (2) aus dem Tank (1) zu der Dosiereinrichtung (3) während des Erzeugens und des Abgebens der mehrkörnigen Dosiermengen fortgeführt wird, **dadurch gekennzeichnet, dass** zum Öffnen der Ausgabe der Sammeleinrichtung (4) ein verlagerbares Verschlusselement (5; 6) verlagert wird.

2. Verfahren nach Anspruch 1, **dadurch gekennzeichnet, dass** als granulatartiges Material (2) ein Düngermaterial bereitgestellt wird und auf dem Feld getrennte mehrkörnige Düngerdosierstellen (43) erzeugt werden.

3. Verfahren nach Anspruch 2, **dadurch gekennzeichnet, dass** die mehrkörnigen Düngerdosierstellen (43) auf dem Feld jeweils einer getrennt gebildeten Saatstelle (41) mit einem oder mehreren Saatkörnern zugeordnet erzeugt werden.

4. Verfahren nach mindestens einem der vorangehenden Ansprüche, dadurch **gekenn- zeichnet**, dass der Fluidstrom über eine Fluidzuleitung (7) auf die Ausgabe gegeben wird, welche wenigstens abschnittsweise in einer Zuführleitung angeordnet ist, über welche das granulatartige Material (2) aus dem Tank (1) der Dosiereinrichtung (3) zugeführt wird.

5. Verfahren nach mindestens einem der vorangehenden Ansprüche, dadurch gekenn- **zeichnet,** dass die Sammeleinrichtung (4) Dosierfächer (21) zum jeweiligen Aufnehmen einer der mehrkörnigen Dosiermengen aufweist.

6. Verfahren nach Anspruch 5, **dadurch gekennzeichnet, dass** die Dosierfächer (21) auf einem Drehbauteil (20) getrennt angeordnet sind, derart, dass die Dosierfächer (21) jeweils mittels des Drehbauteils (20) zu der Ausgabe hin und von dieser weg verlagerbar sind.

7. Verfahren nach mindestens einem der vorangehenden Ansprüche, dadurch **gekenn- zeichnet,** dass die Dosierungen zumindest in einem Abschnitt eines Transportweges in der Ausbringeinrichtung (9) mittels eines gesteuerten Luftstroms beschleunigt transportiert werden.

8. Verfahren nach mindestens einem der vorangehenden Ansprüche, dadurch g**ekenn- zeichnet,** dass die Dosierungen von der Dosiereinrichtung (3) mit einer Frequenz von mindestens 5 Dosierungen pro Sekunde abgegeben werden, bevorzugt mit einer Frequenz von mindestens 20 Dosierungen pro Sekunde.

9. Anordnung zum Ausbringen von mehrkörnigen Dosierungen eines granulatartigen Materials für eine landwirtschaftliche Maschine, mit
- einem Tank (1), der eingerichtet ist, ein granulatartiges Material (2) aufzunehmen;
- einer Dosiereinrichtung (3);
- einer Zuführeinrichtung, die eingerichtet ist, das granulatartige Material (2) aus dem Tank (1) der Dosiereinrichtung (3) zuzuführen;
- einer Sammeleinrichtung (4), die von der Dosiereinrichtung (3) umfasst und eingerichtet ist, zum Erzeugen von mehrkörnigen Dosiermengen das zugeführte granulatartige Material (2) zu sammeln;
- einer Öffnungseinrichtung, die eingerichtet ist, zum diskontinuierlichen Abgeben von Dosierungen des granulatartigen Materials eine Ausgabe der Dosiereinrichtung (3) in zeitlichen Abständen mit einem Fluidstrom zu beaufschlagen und hierdurch zu öffnen, wobei die mehrkörnigen Dosiermengen hierbei jeweils teilweise oder vollständig als zeitlich beabstandete Dosierungen diskontinuierlich abgegeben werden; und
- einer Ausbringeinrichtung (9), die eingerichtet ist, die zeitlich beabstandeten Dosierungen von der Ausgabe der Dosiereinrichtung (3) zu empfangen und auszubringen, wodurch auf einem Feld, über welches sich die landwirtschaftliche Maschine bewegt, getrennte mehrkörnige Dosierstellen erzeugbar sind;
wobei die Anordnung eingerichtet ist, das Zuführen des granulatartigen Materials (2) aus dem Tank (1) zu einer Dosiereinrichtung (3) während des Erzeugens und des Abgebens der mehrkörnigen Dosiermengen fortzuführen, **dadurch gekennzeichnet, dass** die Öffnungseinrichtung ein verlagerbares Verschlusselement (5; 6) aufweist, welches zum Öffnen der Ausgabe der Sammeleinrichtung (4) verlagert wird.

10. Verteilmaschine, mit einer Anordnung nach Anspruch 9.

11. Verteilmaschine nach Anspruch 10, die als Sämaschine ausgeführt ist.

## Claims

1. Method for distributing multi-grain doses of a granulate-like material by means of an agricultural machine, comprising
- providing a granulate-like material (2) in a tank (1);
- feeding the granulate-like material (2) from the tank (1) to a dosing device (3);
- producing multi-grain dosing quantities of the granulate-like material (2) by means of the dosing device (3);
- dispensing the multi-grain dosing quantities of the granulate-like material by means of the dosing device (3) to a distribution device (9), wherein the multi-grain dosing quantities are respectively partially or completely dispensed discontinuously as doses spaced apart in time; and
- distributing the doses spaced apart in time by means of the distribution device (9), whereby separate multi-grain dosing points are produced on a field over which the agricultural machine moves;
wherein the supplied granulate-like material (2) is collected in a collecting device (4) of the dosing device (3) for producing the multi-grain dosing quantities and an outlet of the collecting device (4) for discontinuously dispensing the doses at time intervals is subjected to a fluid flow and thereby opened in order to release the doses for distribution,
wherein the feeding of the granulate-like material (2) from the tank (1) to the dosing device (3) continues during the producing and the dispensing of the multi-grain dosing quantities, **characterised in that** a displaceable closure element (5; 6) is displaced for opening the outlet of the collecting device (4).

2. Method according to Claim 1, **characterised in that** a fertiliser material is provided as the granulate-like material (2) and separate multi-grain fertiliser dosing points (43) are produced on the field.

3. Method according to Claim 2, **characterised in that** the multi-grain fertiliser dosing points (43) on the field are respectively produced in association with a separately formed seed point (41) with one or more seeds.

4. Method according to at least one of the preceding claims, **characterised in that** the fluid flow is fed to the outlet via a fluid supply line (7), which is arranged in a feed line at least in sections, via which the granulate-like material (2) is fed from the tank (1) to the dosing device (3).

5. Method according to at least one of the preceding claims, **characterised in that** the collecting device (4) has dosing compartments (21) for respectively accommodating one of the multi-grain dosing quantities.

6. Method according to Claim 5, **characterised in that** the dosing compartments (21) are arranged separately on a rotary component (20) in such a way that the dosing compartments (21) can be respectively displaced towards and away from the outlet by means of the rotary component (20).

7. Method according to at least one of the preceding claims, **characterised in that** the doses are transported at an accelerated rate at least in one section of a transport path in the distribution device (9) by means of a controlled air flow.

8. Method according to at least one of the preceding claims, **characterised in that** the doses are dispensed from the dosing device (3) at a frequency of at least 5 doses per second, preferably at a frequency of at least 20 doses per second.

9. Arrangement for distributing multi-grain doses of a granulate-like material for an agricultural machine, having
- a tank (1), which is configured to accommodate a granulate-like material (2);
- a dosing device (3);
- a feeding device, which is configured to feed the granulate-like material (2) from the tank (1) to the dosing device (3);
- a collecting device (4), which is comprised in the dosing device (3) and is configured to collect the supplied granulate-like material (2) for producing multi-grain dosing quantities;
- an opening device, which is configured to subject an outlet of the dosing device (3) to a fluid flow at time intervals and thereby open it for discontinuously dispensing doses of the granulate-like material, wherein the multi-grain dosing quantities are respectively partially or completely dispensed discontinuously as doses spaced apart in time; and
- a distribution device (9), which is configured to receive the doses spaced apart in time from the outlet of the dosing device (3) and to distribute them, whereby separate multi-grain dosing points can be produced on a field over which the agricultural machine moves;
wherein the arrangement is configured to continue the feeding of the granulate-like material (2) from the tank (1) to a dosing device (3) during the producing and the dispensing of the multi-grain dosing quantities, **characterised in that** the opening device has a displaceable closure element (5; 6), which is displaced for opening the outlet of the collecting device (4).

10. Spreader, having an arrangement according to Claim 9.

11. Spreader according to Claim 10, which is designed as a seed drill.

## Revendications

1. Procédé, destiné à épandre des dosages multigrains d'une matière de type granuleux au moyen d'un engin agricole, consistant à
- mettre à disposition une matière de type granuleux (2) dans une cuve (1) ;
- amener la matière (2) de type granuleux à partir de la cuve (1) vers un dispositif de dosage (3) ;
- créer des quantités dosées multigrains de la matière (2) de type granuleux au moyen du dispositif de dosage (3) ;
- distribuer les quantités dosées multigrains de la matière de type granuleux à l'aide du dispositif de dosage (3) vers un dispositif d'épandage (9), à cet effet, les quantités dosées multigrains étant distribuées de manière discontinue, chaque fois partiellement ou totalement en tant que dosages à intervalles temporels ; et
- épandre les dosages à intervalles temporels au moyen du dispositif d'épandage (9), en conséquence de quoi des points de dosage multigrains séparés sont créés sur un champ, au-dessus duquel l'engin agricole se déplace ;
pour créer les quantités dosées multigrains, la matière de type granuleux (2) étant collectée dans un dispositif collecteur (4) du dispositif de dosage (3) et une sortie du dispositif collecteur (4) étant exposée à un courant de fluide, pour la distribution discontinue dans des intervalles temporels et étant ainsi ouverte, pour libérer le dosage pour l'épandage,
l'alimentation de la matière de type granuleux (2) à partir de la cuve (1) vers le dispositif de dosage (3) étant poursuivie pendant la création et la distribution des quantités dosées multigrains, **caractérisé en ce que** pour ouvrir la sortie du dispositif collecteur (4), l'on déplace un élément de fermeture (5 ; 6) déplaçable.

2. Procédé selon la revendication 1, **caractérisé en ce qu'**en tant que matière (2) de type granuleux, l'on met à disposition un fertilisant et **en ce que** l'on crée sur le champ des points de dosage (43) de fertilisant multigrains séparés.

3. Procédé selon la revendication 2, **caractérisé en ce que** l'on créé les points de dosage (43) de fertilisant multigrains en les associant sur le champ chacun à un point de semence (41) conçu séparément avec une ou plusieurs graines de semence.

4. Procédé selon au moins l'une quelconque des revendications précédentes, **caractérisé en ce que** le courant fluidique est donné sur la sortie par l'intermédiaire d'une conduite d'alimentation (7) de fluide, laquelle est placée au moins par endroits dans une conduite d'amenage, par l'intermédiaire de laquelle la matière de type granuleux (2) est amenée à partir de la cuve (1) vers le dispositif de dosage (3).

5. Procédé selon au moins l'une quelconque des revendications précédentes, **caractérisé en ce que** le dispositif collecteur (4) comporte des compartiments de dosage (21), dont chacun est destiné à recevoir l'une des quantités dosées multigrains.

6. Procédé selon la revendication 5, **caractérisé en ce que** les compartiments de dosage (21) sont placés séparément sur un composant rotatif (20), de telle sorte que les compartiments de dosage (21) soient déplaçables chacun au moyen du composant rotatif (20) en direction de la sortie et en éloignement de celle-ci.

7. Procédé selon au moins l'une quelconque des revendications précédentes, **caractérisé en ce que** l'on transporte de manière accélérée les dosages au moins dans un tronçon d'un trajet de transport dans le dispositif d'épandage (9) au moyen d'un flux d'air commandé.

8. Procédé selon au moins l'une quelconque des revendications précédentes, **caractérisé en ce que** les dosages sont distribués par le dispositif de dosage (3) à une fréquence d'au moins 5 dosages par seconde, de préférence à une fréquence d'au moins 20 dosages par seconde.

9. Ensemble, destiné à épandre des dosages multigrains d'une matière de type granuleux pour un engin agricole, comprenant
- une cuve (1), qui est configurée pour recevoir une matière (2) de type granuleux ;
- un dispositif de dosage (3);
- un dispositif d'amenage, qui est configuré pour amener la matière de type granuleux (2) à partir de la cuve (1) vers le dispositif de dosage (3) ;
- un dispositif collecteur (4), qui est entouré par le dispositif de dosage (3) et qui est configuré pour collecter des quantités dosées multigrains de la matière de type granuleux (2) amenée ;
- un dispositif d'ouverture, qui pour la distribution discontinue de dosages de la matière de type granuleux, est configuré pour exposer une sortie du dispositif de dosage (3) à un courant de fluide et pour l'ouvrir ainsi, à cet effet, les quantités dosées multigrains étant distribuées chacune partiellement ou totalement de manière discontinue en tant que dosages à intervalles temporels ; et
- un dispositif d'épandage (9), qui est configuré pour recevoir les dosages à intervalles temporels à partir de la sortie du dispositif de dosage (3) et pour les épandre, en conséquence de quoi des points de dosage multigrains séparés peuvent être créés sur un champ, au-dessus duquel l'engin agricole se déplace ;
l'ensemble étant configuré pour poursuivre l'amenage de la matière de type granuleux (2) à partir de la cuve (1) vers un dispositif de dosage (3) pendant la création et la distribution des quantités dosées multigrains, **caractérisé en ce que** le dispositif d'ouverture comporte un élément de fermeture (5 ; 6) déplaçable, que l'on déplace pour ouvrir la sortie du dispositif collecteur (4).

10. Engin distributeur, pourvu d'un ensemble selon la revendication 9.

11. Engin distributeur selon la revendication 10, qui est réalisé sous la forme d'un semoir.
